# EUROPEAN PATENT APPLICATION

(11) **EP 4 336 645 A1**
(43) Date of publication of application: **13.03.2024**
(21) Application number: 22887515.9
(22) Date of filing: 24.10.2022
(51) Int. Cl.: H01M 50/531, B23K 26/38, B23K 37/047

(54) **METHOD FOR MANUFACTURING ELECTRODE FOR SECONDARY BATTERY, ELECTRODE FOR SECONDARY BATTERY, AND ELECTRODE MANUFACTURING SYSTEM USED FOR METHOD**

(30) Priority: 25.10.2021 KR 20210142521; 21.10.2022 KR 20220136351
(71) Applicant: LG Energy Solution, Ltd., Seoul 07335 (KR)
(72) Inventor: LEE, Seo Jun, Daejeon 34122 (KR); LEE, Hyuk Soo, Daejeon 34122 (KR); KIM, Tae Su, Daejeon 34122 (KR); PARK, Dong Hyeuk, Daejeon 34122 (KR); LEE, Hyojin, Daejeon 34122 (KR); KIM, Gil Woo, Daejeon 34122 (KR); PARK, Jung Hyun, Daejeon 34122 (KR); LEE, Byunghee, Daejeon 34122 (KR); LEE, Sera, Daejeon 34122 (KR)
(74) Representative: Plasseraud IP
(86) International application number: PCT/KR2022/016216
(87) International publication number: WO 2023/075319

(57) **Abstract**

The present invention provides a method for manufacturing an electrode for a secondary battery comprising the steps of (a) preparing an electrode sheet comprising a current collector partitioned into a coating portion and a non-coating portion and having an insulating layer laminated on the non-coating portion; and (b) forming an electrode tab by notching the non-coating portion on which the insulating layer is laminated, wherein the notching is performed using a laser having a pulse width of 100 ps to 10⁻⁶ ps, and an electrode for a secondary battery and an electrode manufacturing system used in the method described above.

## Description

### [Technical Field]

The present application claims the benefits of priorities based on Korean Patent Application No. 10-2021-0142521 filed on October 25, 2021 and Korean Patent Application No. 10-2022-0136351 filed on October 21, 2022, all the contents of which are incorporated herein by reference.

The present invention relates to a method for manufacturing an electrode for a secondary battery, an electrode for a secondary battery, and an electrode manufacturing system used in the method described above.

### [Background Art]

As the demand for automobiles and portable devices increases, the demand for secondary batteries as an energy source is rapidly increasing. In particular, the lithium secondary batteries with high energy density and discharging voltage among secondary batteries have been commercialized and widely used.

In terms of the shape of the battery among the lithium secondary batteries, there is a demand for prismatic secondary batteries and pouch-type secondary batteries that can be applied to mobile phones and automobiles, and in terms of materials, there is a high demand for lithium secondary batteries such as lithium-ion batteries and lithium-ion polymer batteries, which have advantages such as high energy density, discharging voltage, and output stability.

The lithium secondary batteries are also classified depending on the structure of the electrode assembly of the positive electrode/separator/negative electrode structure. Specifically, a jelly-roll (wound type) electrode assembly of a structure in which long sheet-type positive electrodes and negative electrodes are wound with a separator interposed, a stacked type electrode assembly in which a plurality of positive electrodes and negative electrodes cut as units of a predetermined size are sequentially stacked with a separator interposed therebetween, and a stack/folding type electrode assembly having a structure in which bi-cells or full cells, in which positive electrodes and negative electrodes of a predetermined unit are stacked with separators interposed therebetween, are wound with a separator sheet, etc. are known.

Recently, a pouch-type battery having a structure in which a stacked type or stack/folding-type electrode assembly is embedded in a pouch-type battery case of an aluminum laminate sheet are attracting a lot of attention for reasons such as low manufacturing cost, low weight, and easy deformation of shape, and is also gradually increasing in its usage.

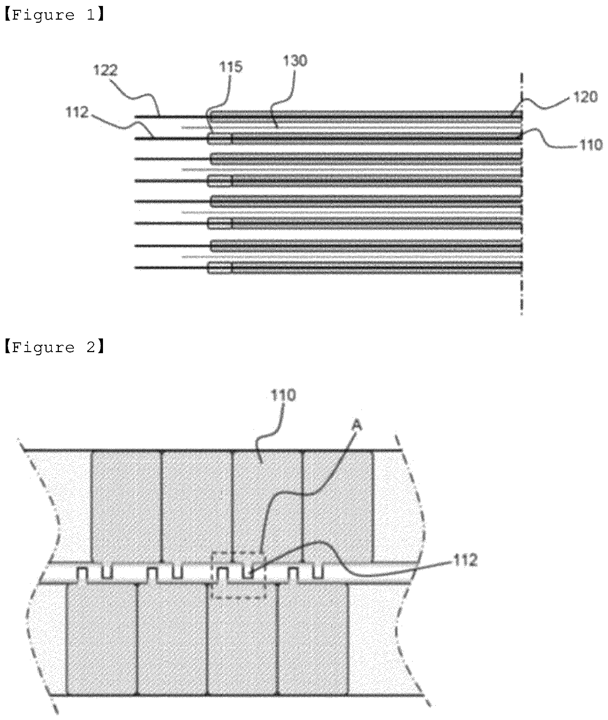

Meanwhile, the stacked type electrode assembly or stack/folding-type electrode assembly has a structure which is laminated in the state where the separator is interposed between the positive electrode and the negative electrode with a protruded electrode tab on one side. In the case of this structure, if the temperature rises due to exposure to an external heat source or an internal short circuit, there is a case where some of the positive and negative electrodes may come into contact and cause a short circuit, while the separator shrinks, Therefore, in order to prevent these problems, a technology of forming an insulating layer on the positive electrode and/or the negative electrode tab portion has been introduced, as shown in FIG. 1.

The technology of forming the insulating layer for the electrode tab improved the safety and reliability of the battery, but also caused an increase in the number of steps and difficulty in forming the electrode tab.

### [Prior Art Document]

Korean Laid-open Patent Publication No. 10-2015-0098445

### [Disclosure]

### [Technical Problem]

The inventors of the present invention applied a laser cutting method while studying an efficient notching process of an electrode tab on which an insulating layer is laminated. However, it was confirmed that since the line width of the incision line by the laser is very narrow, problems such as the re-fusion of the melted insulating layer after cutting, the occurrence of debris when re-fusion portion is separated, the bad profile of the electrode tab due to the re-fusion, the lifting (or splitting) of the insulating layer due to melting and curling phenomenon of the insulating layer, and the exposure of a part of the current collector due to the lifting of the insulating layer are occurred.

The inventors of the present invention have been constantly trying to solve the above problems, and as a result, have found a way to block the occurrence of the problems as described above by minimizing the melting of the insulating layer during cutting, and thus have completed the present invention.

It is an object of the present invention to provide a method for manufacturing an electrode for a secondary battery, which is capable of manufacture of an electrode comprising an electrode tab on which an insulating layer is laminated, with excellent efficiency and excellent quality by using a specific laser.

In addition, it is an object of the present invention to provide an electrode for a secondary battery having an insulating layer-laminated electrode tab having an excellent cutting profile.

In addition, it is an object of the present invention to provide an electrode manufacturing system used in the method described above.

### [Technical Solution]

In order to achieve the above objects, the present invention provides a method for manufacturing an electrode for a secondary battery comprising the steps of,
(a) preparing an electrode sheet comprising a current collector partitioned into a coating portion and a non-coating portion and having an insulating layer laminated on the non-coating portion; and
(b) forming an electrode tab by notching the non-coating portion on which the insulating layer is laminated,
wherein the notching is performed using a laser having a pulse width of 100 ps to 10⁻⁶ ps.

In addition, the present invention provides
an electrode for a secondary battery comprising a laser cutting electrode tab cut in a state in which an insulating layer and a current collector are stacked,
wherein the thickness of the cut section of the electrode tab is 1 to 1.7 times the thickness before cutting.

In addition, the present invention provides an electrode for a secondary battery comprising a laser cutting electrode tab cut in a state in which an insulating layer and a current collector are stacked, wherein the length of the current collector protruding from the cutting edge of the electrode tab based on the front end of the insulating layer is less than 20 *µ*m.

In addition, the present invention provides an electrode manufacturing system comprising:
an electrode sheet supply device for supplying an electrode sheet comprising a current collector partitioned into a coating portion and a non-coating portion and having an insulating layer laminated on the non-coating portion;
a device that irradiates a laser beam having a pulse width of 100 ps to 10⁻⁶ ps to form an electrode tab by notching the non-coating portion on which the insulating layer is laminated; and
a jig for supporting the laser beam irradiation portion for the electrode sheet on the lower surface.

### [Advantageous Effects]

The electrode manufacturing method of the present invention provides an effect of greatly improving the manufacturing efficiency of the electrode and the quality of the electrode, by applying a laser with a pulse width of 100 ps to 10⁻⁶ ps to the notching process of the electrode tab on which the insulating layer is laminated, and thus preventing problems such as the re-fusion of the insulating layer after cutting, the occurrence of debris when the re-fusion portion is separated, the bad profile of the electrode tab due to re-fusion, lifting (or splitting) phenomenon of the insulating layer due to melting and curling of the insulating layer, and the exposure of the current collector due to the lifting of the insulating layer.

In addition, the electrode of the present invention provides an excellent insulating layer-laminated electrode tab profile, thereby providing an effect of improving the stability and reliability of the battery.

In addition, the electrode manufacturing system of the present invention provides an electrode manufacturing system capable of efficiently performing the above method.

### [Description of Drawings]

FIG. 1 is a partial cross-sectional view of a battery structure including stacked electrodes including electrode tabs on which insulating layers are stacked.
FIG. 2 is a plan view showing the shape of the electrode sheet in the previous stage of the notching process of the electrode tab, in the process of manufacturing an electrode with an insulating layer laminated on the electrode tab.

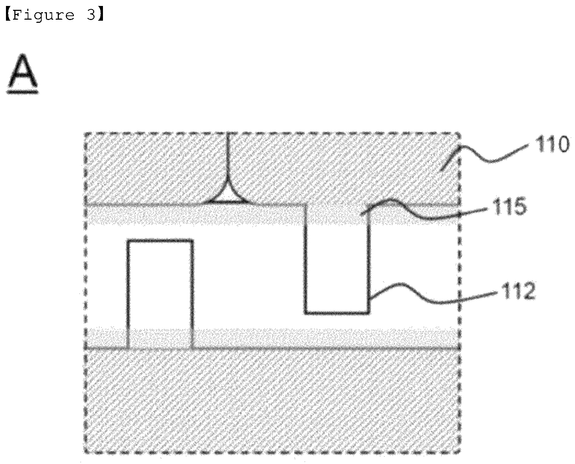

FIG. 3 is an enlarged view of part A of FIG. 2.
FIG. 4 is a diagram visually showing the characteristics of the laser used in the present invention.
FIG. 5 is a graph showing the peak power depending on the pulse width of the laser.
FIG. 6 is a diagram schematically showing an electrode manufacturing system according to an embodiment of the present invention.
FIG. 7 is a photograph of the state in which the insulating layer is splitd on the cutting surface when the insulating layer-laminated electrode tab is cut using a nanosecond laser.
FIG. 8 is a photograph showing the state in which the debris in the form of a shard occurs on the cutting surface when the insulating layer-laminated electrode tab is cut using a mold.

### [Best Mode]

Hereinafter, the present invention will be described in detail with reference to the accompanying drawings for an embodiment of the present invention so that those of ordinary skill in the art can easily carry out the present invention. However, the present invention may be embodied in many different forms and is not limited to the embodiments described herein. The same reference numerals are assigned to the similar parts throughout the specification.

When it is mentioned that a certain component "is connected to, provided with, or installed on" another component, it should be understood that it may be directly connected to or installed on another component, but other components may exist in therebetween. On the other hand, when it is mentioned that a certain component is "directly connected to, provided with, or installed on" another component, it should be understood that there are no other components in the middle. Meanwhile, other expressions describing the relationship between the elements, such as "on top" and "directly on top" or "between" and "immediately between" or "neighboring to" and "directly neighboring to", etc., should be interpreted similarly.

The manufacturing method of the electrode for the secondary battery of the present invention comprises,
(a) preparing an electrode sheet comprising a current collector partitioned into a coating portion and a non-coating portion and having an insulating layer laminated on the non-coating portion; and
(b) forming an electrode tab by notching the non-coating portion on which the insulating layer is laminated,
wherein the notching is performed using a laser having a pulse width of 100 ps to 10⁻⁶ ps.

If the pulse width exceeds 100 ps, side effects due to heat may occur, and if the pulse width is less than 10⁻⁶ ps, it may be undesirable in terms of cost.

The pulse width may be selected from, for example, a range of picoseconds, femtoseconds, and the like, and may be used in a range of 100 ps to 100 fs.

In a conventional electrode manufacturing method, a method of applying laser equipment to notching of an electrode tab on which an insulating layer is not laminated has been introduced. However, the notching of an electrode tab on which an insulating layer is not laminated and the notching of an electrode tab on which an insulating layer is laminated have a large difference in notching material. Therefore, applying the conventional laser method to the notching of the electrode tab on which the insulating layer is laminated as it is seems to be an undesirable choice when considering the efficiency of the notching process and the quality of the manufactured electrode tab. That is, when the insulating layer-laminated electrode tab is notched (or cut), the characteristics of the material of the insulating layer have a great influence on the efficiency of the notching process or the quality of the notched electrode tab, and thus applying the conventional notching process of an electrode tab on which the insulating layer is not laminated as it is has clear limits in terms of efficiency or quality.

Specifically, when the conventional laser application technology is applied to the notching of the insulating layer-laminated electrode tab, it is confirmed that the efficiency of the notching process and the quality of the notched electrode tab are greatly reduced due to the melting problem of the insulating layer. That is, when the conventional laser technology using the heat absorption of the cutting medium and the subsequent cutting mechanism of the medium is applied to the notching of the insulating layer-laminated electrode tab, there is a problem that the insulating layer melted during cutting is fused again, while the characteristics of laser cutting with a very narrow line width of the incision line and the characteristics of the insulating layer, which is cut while melting by absorbing the laser wavelength, work together. Also, when separating the re-fused part, there are also problems that the profile of the cutting surface becomes bumpy, the debris occurs, for example, the molten insulators are agglomerated to be lumpy and squashy, the insulating layer is lifted (or splitd) due to melting and curling of the insulating layer, and a part of the current collector is exposed due to the lifting phenomenon above. In addition, the profile of the cross section of this electrode tab shows a high defect rate.

Therefore, the present invention is characterized by using a laser having a pulse width of 100 ps to 10⁻⁶ ps in order to solve the above problems.

As confirmed through various experiments by the inventors of the present invention, the problems described above occur even if a pulse laser as well as a continuous wave (cw) laser conventionally used in a notching process is used. However, if a laser having a pulse width of 100 ps to 10⁻⁶ ps among pulse lasers is used, the above problem seems to be avoided, and an effect of greatly improving the notching speed is obtained. That is, even if a nanosecond laser outside the scope of the present invention is used, a problem due to melting of the insulating layer occurs, but if a laser having a pulse width of picosecond or less (pulse width of 100 ps or less) is used, the above problems do not occur.

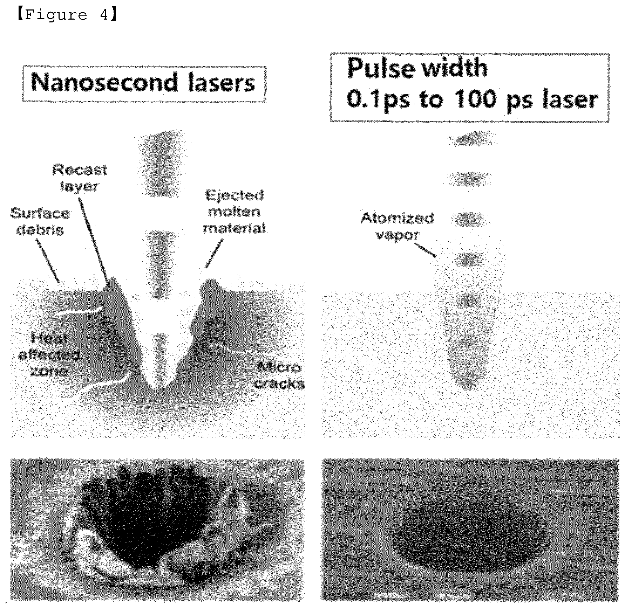

This difference seems to be due to the cutting mechanism of the laser as shown in FIG. 4. That is, as shown in FIG. 4, in the case of a nanosecond laser, an area affected by heat absorption is generated in the cutting material, and if the insulating layer is located in this area, it is melted and causes problems as described above.

However, if a laser with a pulse width of picoseconds (pulse width of 100 ps or less) is used, since atomic bonds are broken before sufficient energy is delivered to the atoms, it is possible to cut in a cold state without heat input, thereby avoiding thermal problems.

In one embodiment of the present invention, a laser having a pulse width of 10 ps to 10⁻³ ps or 5 ps to 10⁻¹ ps may be effectively used. This is because a laser having a pulse width in the above range can be practical when considering cost and the like, since the desired effect in the present invention can be obtained even if the pulse width is not smaller.

In one embodiment of the present invention, although infrared (IR), ultraviolet (UV), and light of a wavelength in the green region may be used for the laser, IR may be preferably used considering the stability and usability of the laser.

In one embodiment of the present invention, as the laser, one having an average power energy of 10W to 200W based on an average traveling speed of 100 mm/s to 2,000 mm/s, one having an average power energy of 20W to 150W based on an average traveling speed of 500 mm/s to 1,500 mm/s, or one having an average power energy of 50W to 100W based on an average traveling speed of 1,000 mm/s may be used.

In one embodiment of the present invention, the average traveling (cutting) speed during the notching may be 100 mm/s to 2,000 mm/s, and may be preferably 500 mm/s to 1,500 mm/s in terms of notching efficiency.

The laser average power energy and average traveling speed described above are illustrative of one embodiment of the present invention, but the present invention is not limited thereto. The average power may be properly changed depending on the environment such as the configuration of the laser optical system and the light collecting ability of the lens, and the average traveling speed may be appropriately changed depending on the environment such as the shape of the notching object.

In one embodiment of the present invention, the insulating layer may comprise a polymer resin. The insulating layer may further comprise at least one inorganic particle selected from the group consisting of boehmite (AlO(OH)), Al₂O₃, γ-AlOOH, Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SiC), and boron nitride (BN) in addition to the polymer.

In addition, at least one material used in this field for the insulating layer may be further comprised in addition to the above components.

In the above, the weight ratio of the polymer (binder) and inorganic particles comprised in the insulating layer may be 5:95 to 99:1, 5:95 to 50:50, or 10:90 to 50:50.

The polymer resin may be at least one selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluorine rubber, polyvinylidene fluoride, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylenepropylenediene copolymer, polyvinylpyridine, chlorosulfonated polyethylene, latex, polyester resin, acrylic resin, phenolic resin, epoxy resin, polyvinyl alcohol, hydroxypropylmethylcellulose, hydroxypropylcellulose, diacetyl cellulose and the like.

In one embodiment of the present invention, the electrode sheet is not particularly limited, but may include, for example, a current collector having a thickness of less than 30 µm and an insulating layer having a thickness of one side of less than 40 µm.

In one embodiment of the present invention, the electrode sheet may be one in which an active material is laminated or not laminated on a coating portion. Typically, the active material is used in a laminated state, but is not limited thereto.

In one embodiment of the present invention, the electrode may be a positive electrode or a negative electrode. The current collector used for the positive electrode or the negative electrode may be a foil made of copper, aluminum, gold, nickel, copper alloy, or a combination thereof, but is not limited thereto. In particular, in the present invention, the electrode may be a positive electrode, and aluminum (Al) foil may be used as a current collector.

In the method for manufacturing the electrode for the secondary battery, methods known in the art may be employed without limitation except for the above description.

In addition, the present invention relates to
an electrode for a secondary battery comprising a laser cutting electrode tab with an insulating layer and current collector cut in a laminated state,
wherein the thickness of the cut section of the electrode tab is 1 to 1.7 times the thickness before cutting.

The laser may be a laser having a pulse width of 100 ps to 10⁻⁶ ps.

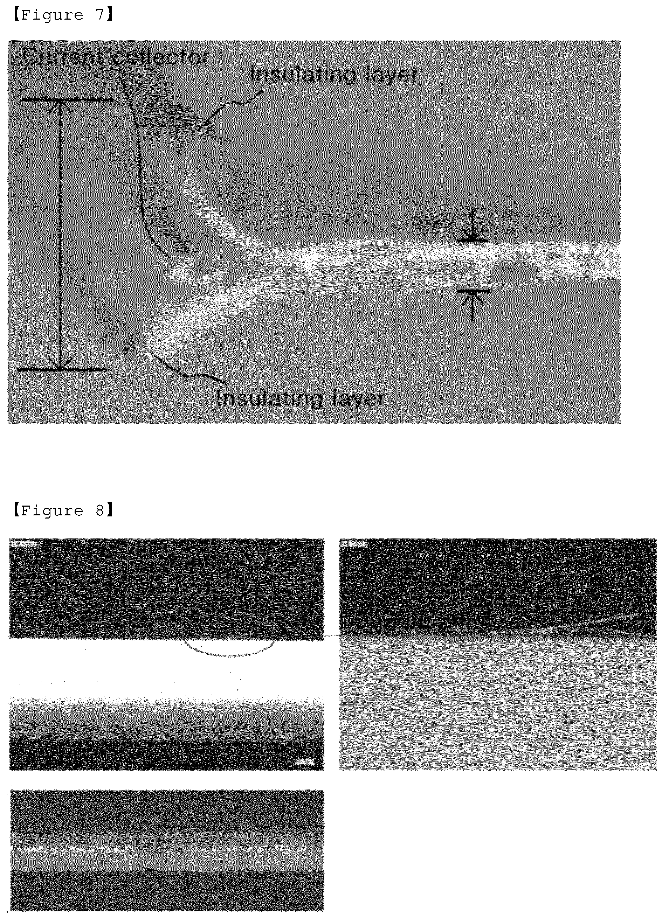

In the conventional electrode comprising a laser cutting electrode tab in which the insulating layer and the current collector are cut in a laminated state, the lifting (or splitting) of the insulating layer is very large due to the melting and curling of the insulating layer, as shown in FIG. 7. The profile of the cross section of the electrode tab causes a short circuit, thereby resulting in a battery failure.

The electrode of the present invention has the feature of minimizing the lifting (or splitting) of the insulating layer by solving the above problems.

In the above, the thickness of the cut section of the electrode tab may be 1 to 1.6 times the thickness before cutting. Also, the lower limit may be 1.1 times, 1.2 times, 1.3 times, 1.4 times, or 1.5 times.

In addition, the cut cross section of the electrode tab of the present invention has a feature that does not comprise the debris in the form of a shard that inevitably occurs when cutting with a mold, as shown in FIG. 8.

In addition, the present invention relates to
an electrode for a secondary battery comprising a laser cutting electrode tab with an insulating layer and current collector cut in a laminated state,
wherein in the cutting cross section of the electrode tab, the length of the current collector protruding from the front end of the insulating layer is less than 20 gm.

The laser may be a laser having a pulse width of 100 ps to 10⁻⁶ ps.

In the conventional electrode comprising a laser cutting electrode tab with an insulating layer and current collector cut in a laminated state, because of the characteristic that the insulating layer is cut while it absorbs the laser wavelength and melts, a very large lifting (or splitting) of the insulating layer occurs due to melting and curling of the insulating layer, as shown in FIG. 7. Also, the occurrence of this lifting phenomenon causes exposure of the current collector. The exposed current collector causes a short circuit, etc., thereby resulting in battery failure.

The electrode of the present invention has the feature of minimizing the exposure of the current collector by solving the above problems.

In the present invention, the length of the protruding current collector may have an upper limit of less than 18 *µ*m or less than 16 *µ*m. In addition, the lower limit may be O, 1 *µ*m, 3 *µ*m, 5 *µ*m, 10 *µ*m, 12 *µ*m, or 15 *µ*m.

In addition, the cut cross section of the electrode tab of the present invention has a feature that does not comprise the debris in the form of a shard that inevitably occurs when cutting with a mold, as shown in FIG. 8.

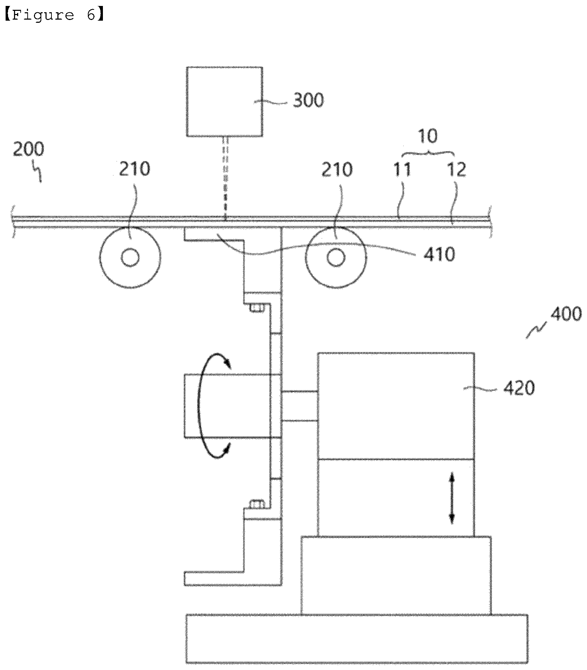

In addition, the present invention relates to an electrode manufacturing system comprising
an electrode sheet supply device 200 for supplying an electrode sheet comprising a current collector partitioned into a coating portion and a non-coating portion and having an insulating layer 11 laminated on the non-coating portion 12, as shown in FIG. 6;
a device 300 that irradiates a laser beam having a pulse width of 100 ps to 10⁻⁶ ps to form an electrode tab by notching the non-coating portion on which the insulating layer 11 is laminated; and
a jig 400 for supporting the laser beam irradiation portion for the electrode sheet on the lower surface.

All of the information related to the manufacturing method of the electrode described above can be applied to the system of the present invention. Therefore, descriptions of overlapping contents will be omitted below.

In one embodiment of the present invention, the electrode sheet supply device 200 may be a roll-to-roll device. At this time, the roll-to-roll device may be of the form shown in FIG. 8, and may further comprise an unwinding roll and a rewinding roll on both sides, which are configurations not shown in FIG. 8.

In one embodiment of the present invention, the laser beam irradiation device 300 may have the same configuration as a commercially available general laser device, except that the device emits a laser beam having a pulse width of 100 ps to 10⁻ 6 ps.

For example, the laser beam irradiation device 300 may comprise a laser source generator, a delivery mirror, a laser beam width adjuster, and a scanner unit, and the scanner may comprise Galvano mirror, Theta lens (e.g., F-Theta lens), and the like.

In one embodiment of the present invention, the structure of the jig 400 is not particularly limited as long as it can support the laser beam irradiation portion for the electrode sheet on the lower surface. For example, as shown in FIG. 8, a device designed to support the electrode sheet while rotating the supporting portion 410 for the electrode sheets composed of a plurality of electrode sheets may also be used.

Hereinafter, the present invention will be described in detail by way of example to explain the present invention in detail. However, specific embodiments according to the present invention may be modified in many different forms, and the scope of the present invention should not be construed as being limited to the examples described in detail below. Examples of the present invention are provided to more completely explain the present invention to those skilled in the art.

### Examples 1 to 3: Manufacture of the electrode for the secondary battery

An electrode sheet in which a positive electrode active material was laminated on both sides of the coating portion of an aluminum foil current collector having a thickness of 15 *µ*m and an insulating layer (15 *µ*m) was laminated on both sides of the non-coating portion, respectively, was prepared. The insulating layer was laminated with a composition in which boehmite and SBS were mixed in a weight ratio of 6:4.

An electrode tab was formed by performing a notching process on the non-coating portion, on which the insulating layer of the electrode sheet was laminated, under the conditions of Table 1 below, using a laser device having a picosecond pulse width.

Photographs of the cut portions of the electrode tabs are shown in Table 1 below.

**Table 1:**

| | **Pulse width(ps)** | **Pulse Energy(J)** | Culling speed **(mm/s)** | Result of notching (flat photograph) |
|---|---|---|---|---|
| Example 1 | 15 | 0.5mJ | 100 | 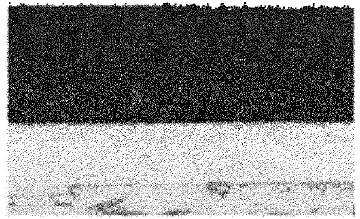 |
| Example 2 | is | 20uJ | 800 | 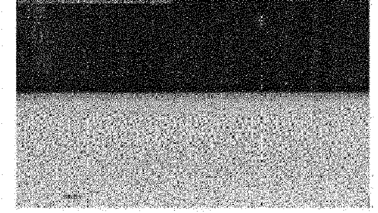 |
| Example 3 | 15 | 27uJ | 1,000 | 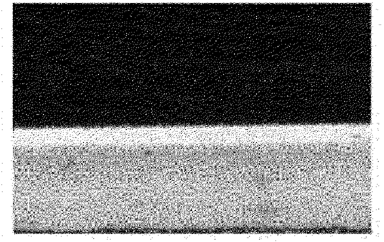 |

In the drawings of Table 1, the black portion is a background when photographing with an optical microscope, and a boundary line of the black portion is a cut portion of an electrode tab in which an insulating layer and a current collector are laminated. Since the drawings are images corresponding to a plan view, an upper insulating layer of the electrode tab is shown, and since the current collector located under the insulating layer is not exposed or protruded through the cut portion, it is not visible in the images. As shown in Table 1, it was confirmed that the electrode manufactured by the picosecond laser of the present invention has a very excellent cutting profile of the electrode tab on which the insulating layer and the current collector are laminated, and the problem of re-fusion of the insulating layer and the problem of exposure of the current collector due to melting of the insulating layer do not occur at all.

### Comparative Examples 1 to 4: Manufacture of electrode for secondary battery

An electrode tab was manufactured by performing a notching process in the same manner as in the above Examples, except that the notching of the electrode tab was performed under the conditions of Table 2 below using a laser having a nanosecond pulse width.

The cut portions of the electrode tabs were photographed and the results are shown in Table 2 below.

**Table 2:**

| | **Pulse width(ns)** | **Pulse Energy(mJ)** | Cutting speed **(mm/s)** | Result of notching (flat photograph) |
|---|---|---|---|---|
| Comparative Example 1 | 20 | 0.16 | 500 | 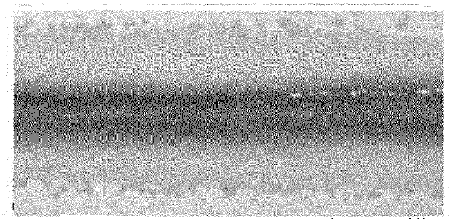 |
| Comparative Example 2 | 20 | 0.16 | 400 | 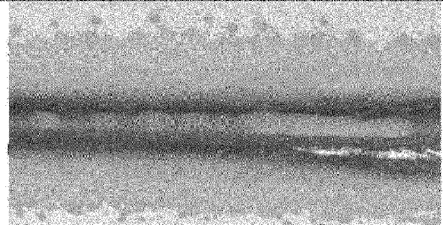 |
| Comparative Example 3 | 60 | 0.6 | 600 | 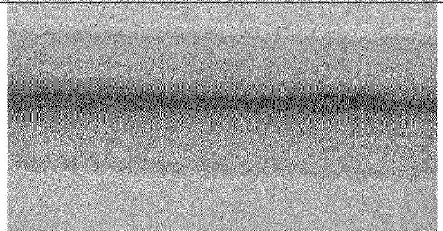 |
| Comparative Example 4 | 60 | 0.6 | 500 | 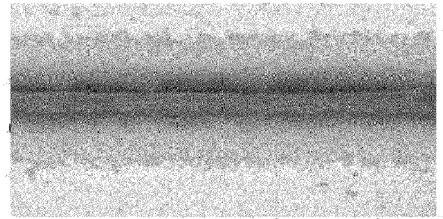 |

The drawings in Table 2 above are photographs by an optical microscope obtained by taking a photograph in a state in which the cut portion is not completely cut or re-fused, and the removal portion is not removed, after cutting by the nanosecond laser. It is confirmed that since the images correspond to plan views, the upper insulating layer and cut portion of the electrode tab on which the insulating layer and the current collector are laminated are mainly shown, and in the case of Comparative Example 1 and 2, a part of the current collector is exposed by melting of the insulating layer (the shiny part of the central portion).

As shown in Table 2, in the case of the positive electrode tab notched with the nanosecond laser, various types of defects were exhibited.

In the case of Comparative Example 1, it is confirmed that after cutting, re-fusion of the insulating layer occurs on the entire surface, and a part of the current collector is exposed by the melting of the insulating layer.

In the case of Comparative Example 2, it is confirmed that after cutting, re-fusion of the insulating layer partially occurs, and the white part in the middle is melted during cutting and then fused and hardened again, thereby resulting in an uncut portion. In addition, it is confirmed that a part of the current collector is exposed (the shiny part) by the melting of the insulating layer.

In the case of Comparative Example 3, it is confirmed that after the insulator is melted by notching, it is re-fused and the current collector is not cut.

In the case of Comparative Example 4, it is confirmed that the cutting is done normally, but the profile of the insulating layer is formed unevenly.

### Comparative Examples 5 to 7: Manufacture of electrode for secondary battery

An electrode sheet in which a positive electrode active material was laminated on both sides of the coating portion of an aluminum foil current collector having a thickness of 15 *µ*m and an insulating layer (15 *µ*m) was laminated on both sides of the non-coating portion, respectively, was prepared. The insulating layer was laminated with a composition in which boehmite and SBS were mixed in a weight ratio of 5:5.

An electrode tab was formed by performing a notching process on the non-coating portion, on which the insulating layer of the electrode sheet was laminated, under the conditions shown in Table 3 below using a laser device having a nanosecond pulse width.

The cut portions of the electrode tabs were photographed and the results are shown in Table 3 below.

**Table 3:**

| | **Comparative Example 5** | **Comparative Example 6** | **Comparative Example 7** |
|---|---|---|---|
| Pulse width(ns) | **900** | **150** | **1 50** |
| Cutting speed(mm/s) | **300** | **300** | **400** |
| **Floor plan** | 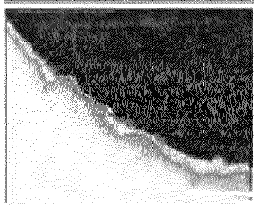 | 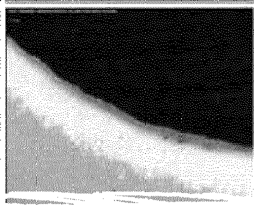 | 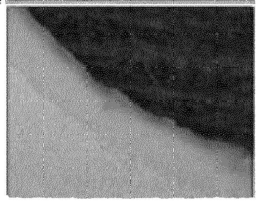 |
| | 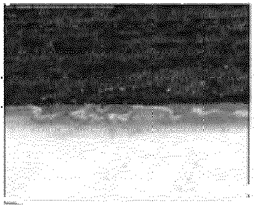 | 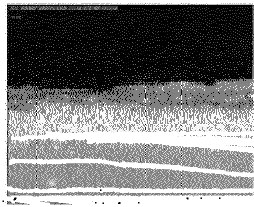 | 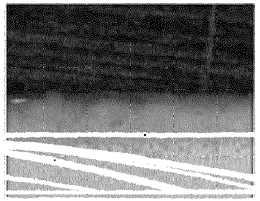 |
| **Cross-section** | 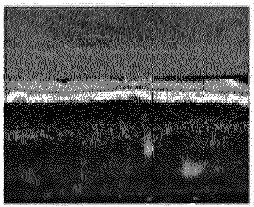 | 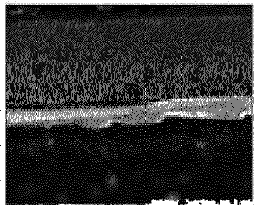 | 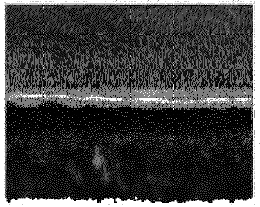 |

In Table 3 above, the upper portion of the flat photograph (round part and straight part) shown in black is the background when photographing with an optical microscope, and the lower portion is the upper insulating layer portion of the electrode tab on which the insulating layer and the current collector are laminated, and the boundary line of the black portion is the cut portion of the electrode tab.

In addition, among the photographs of the cross sections, the sandwich shape of the central portion is the cutting surface of the electrode tab on which the insulating layer and current collector are laminated, and the remaining part is the background part when photographing with an optical microscope.

As shown in Table 2, in the case of the positive electrode tab notched with the nanosecond laser, various types of defects were exhibited.

In the case of Comparative Example 5, it can be seen that the cutting end is bumpy, the current collector protrudes to the outside (the bright part adjacent to the background), the thickness of the cutting surface in the cross section photograph is about 200 *µ*m, which becomes very thick compared to the thickness before cutting (45 *µ*m). The reason for the increase in the thickness is that when the nanosecond laser was irradiated, the insulating layer absorbed heat and melted, thereby separating from the current collector and curling to the outside (see FIG. 7). The current collector exposed in this way can deteriorate the stability of the quality of the battery such as short circuit and low voltage.

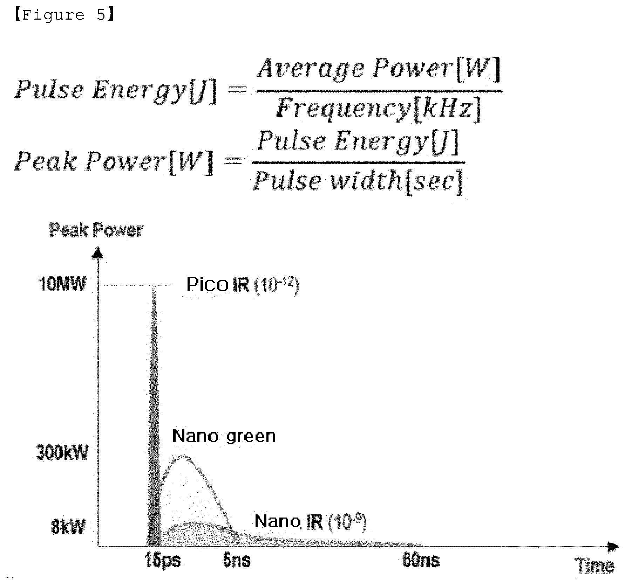

It can be seen that even in the case of Comparative Examples 6 and 7, they show a shape similar to the FIG. 5, and the thickness of the cross section in the cross-section photograph is also about 200 *µ*m, which becomes very thick compared to the thickness before cutting (45 *µ*m).

### Example 4 and Comparative Example 8: Manufacture of electrode for secondary battery

An electrode sheet in which a positive electrode active material was laminated on both sides of the coating portion of an aluminum foil current collector having a thickness of 15 *µ*m and an insulating layer (15 *µ*m) was laminated on both sides of the non-coating portion, respectively, was prepared. The insulating layer was laminated with a composition in which boehmite and PVDF were mixed in a weight ratio of 88:12.

A positive electrode tab was formed by performing a notching process on the non-coating portion, on which the insulating layer of the electrode sheet was laminated, under the conditions shown in Table 4 below, using a laser device having a picosecond pulse width (Example 4) or a laser device having a picosecond pulse width (Comparative Example 8).

The cut portion of the positive electrode tab was photographed, and the results are shown in Table 4 below.

**Table 4:**

| | **Comparative Example 8** | **Example 4** |
|---|---|---|
| Pulse width | 240(ns) | 15(ps) |
| Cutting speed(mm/s) | 400 | 1000 |
| Floor plan | 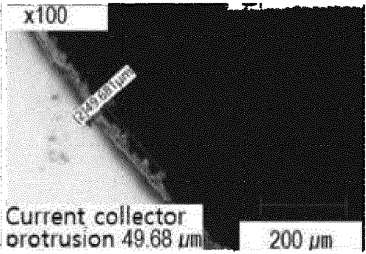 | 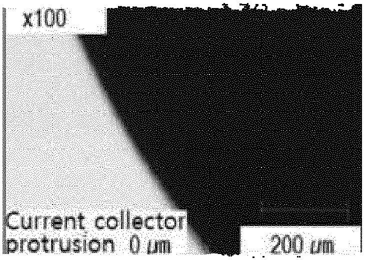 |
| | 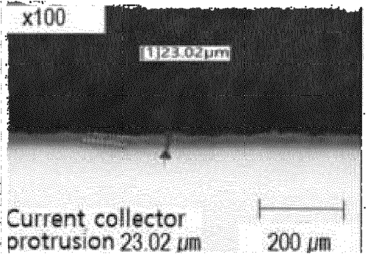 | 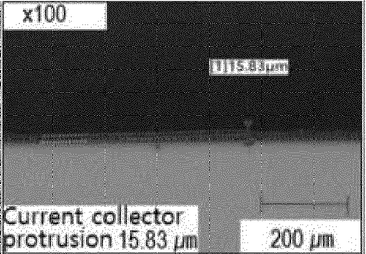 |
| Cross-section | 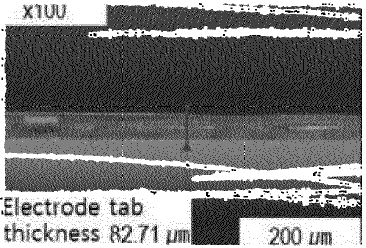 | 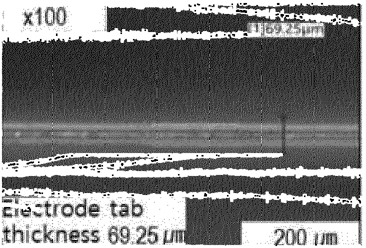 |

In Table 4, the upper portion of the flat photograph (round part and straight part) shown in black is the background when photographing with an optical microscope, and the lower portion is the upper insulating layer portion of the electrode tab on which the insulating layer and the current collector are laminated, and the boundary line of the black portion is the cut portion of the electrode tab.

In addition, among the photographs of the cross sections, the sandwich shape of the central portion is the cutting surface of the electrode tab on which the insulating layer and current collector are laminated, and the remaining part is the background part when photographing with an optical microscope.

As shown in Table 4, it was confirmed that the electrode tab on which the insulating layer notched with the picosecond laser in Example 4 and the current collector are laminated has an excellent cutting profile, and no problem caused by the re-fusion of the insulating layer occurs. In addition, it was confirmed that exposure of the current collector due to melting of the insulating layer was minimized to 0 (round part) and 15.83*µ*m (straight part) .

In addition, it was confirmed that the thickness of the cutting surface in the cross section photograph is 69.25 *µ*m, and thus the thickness increase is minimized compared to the thickness before cutting (45 *µ*m).

In addition, from the experimental results of Example 4, it was confirmed that if a picosecond laser is used, it is possible to increase the cutting speed to 1000 mm/s or more because the thermal damage of the electrode tab is small. That is, in the present invention, the cutting speed can be carried out at 500 mm/s to 1,500 mm/s. On the other hand, in the case of using a nanosecond laser as in Comparative Example 8, when the cutting speed was increased exceeding 400 mm/s, the thermal damage of the electrode tab was significantly increased and the quality was greatly deteriorated.

On the other hand, it was confirmed that the electrode tab, on which the insulating layer notched with the nanosecond laser of Comparative Example 8 and the current collector are laminated, has a bumpy cutting profile, and the exposure of the current collector by melting of the insulating layer is also greatly formed as 49.68 *µ*m (round part) and 23.02 *µ*m (straight part).

In addition, it can be confirmed that the thickness of the cutting surface in the photograph of the cross section was 82.71 *µ*m, and the increase in thickness was remarkably increased compared to the thickness before cutting (45 *µ*m). The reason for the increase in the thickness is that when the nanosecond laser was irradiated, the insulating layer absorbed heat and melted, thereby separating from the current collector and curling to the outside (see FIG. 7). This can deteriorate the stability of the quality of the battery such as short circuit and low voltage.

### Example 5: Manufacture of electrode for secondary battery

An electrode sheet in which a positive electrode active material was laminated on both sides of the coating portion of an aluminum foil current collector having a thickness of 15 *µ*m and an insulating layer (15 *µ*m) was laminated on both sides of the non-coating portion, respectively, was prepared. The insulating layer was laminated with a composition in which boehmite and SBS were mixed in a weight ratio of 6:4.

An electrode tab was formed by performing a notching process on the non-coating portion, on which the insulating layer of the electrode sheet was laminated, under the conditions shown in Table 5 below, using a laser device with a picosecond pulse width.

The cut portion of the electrode tab was photographed, and the results are shown in Table 5 below.

**Table 5:**

| | Example 5 |
|---|---|
| Pulse width | 15(ps) |
| Cutting speed(mm/s) | 1000 |
| Floor plan | 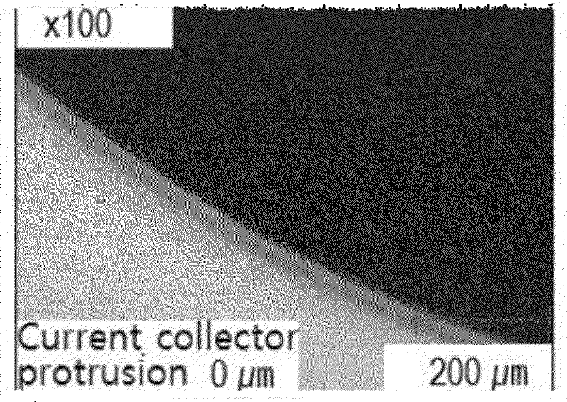 |
| | 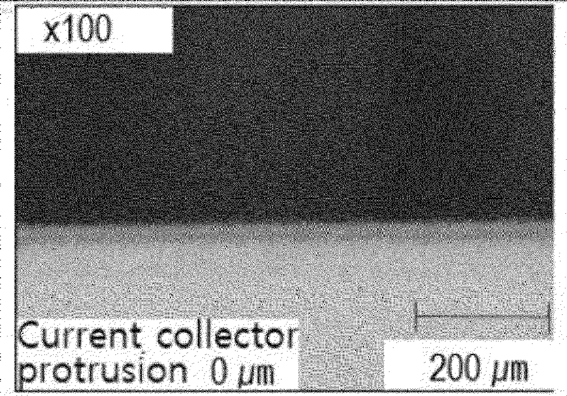 |
| Cross-section | 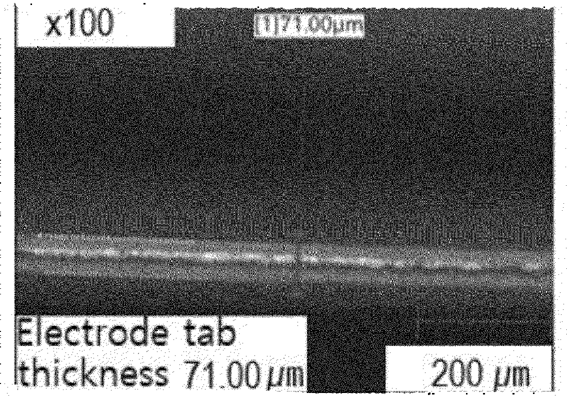 |

In Table 5, the upper portion of the flat photograph (round part and straight part) shown in black is the background when photographing with an optical microscope, and the lower portion is the upper insulating layer portion of the electrode tab on which the insulating layer and the current collector are laminated, and the boundary line of the black portion is the cut portion of the electrode tab.

In addition, among the photographs of the cross sections, the sandwich shape of the central portion is the cutting surface of the electrode tab on which the insulating layer and current collector are laminated, and the remaining part is the background part when photographing with an optical microscope.

As shown in Table 5 above, it was confirmed that the electrode tab on which the insulating layer notched with the picosecond laser in Example 5 and the current collector are laminated has an excellent cutting profile, and no problem caused by the re-fusion of the insulating layer occurs. In addition, it was confirmed that exposure of the current collector due to melting of the insulating layer was minimized to 0 (round part) and 0 (straight part).

In addition, it was confirmed that the thickness of the cutting surface in the photograph of the cross section is 71.00 *µ*m, and the increase in thickness is minimized compared to the thickness before cutting (45 *µ*m).

Although the present invention has been described with respect to the preferred examples mentioned above, various modifications and variations are possible without departing from the spirit and scope of the invention. Accordingly, the appended claims will cover these modifications and variations insofar as they fall within the scope of the present invention.

### [Description of Symbol]

- 10:: Electrode sheet
- 11:: Insulating layer,
- 12:: Non-coating portion
- 110:: Positive electrode current collector
- 112:: Positive electrode tab
- 115:: Insulating layer
- 120:: Negative electrode current collector
- 122:: Negative electrode current collector
- 130:: Separator
- 200:: Electrode sheet supply device
- 210:: Supporting roller
- 300:: Laser beam irradiation device
- 400:: jig
- 410:: electrode sheet supporting portion
- 420:: Motor

## Claims

1. A method for manufacturing an electrode for a secondary battery comprising,
(a) preparing an electrode sheet comprising a current collector partitioned into a coating portion and a non-coating portion and having an insulating layer laminated on the non-coating portion; and
(b) forming an electrode tab by notching the non-coating portion on which the insulating layer is laminated,
wherein the notching is performed using a laser having a pulse width of 100 ps to 10⁻⁶ ps.

2. The method for manufacturing the electrode for the secondary battery according to claim 1, wherein the laser has an average power energy of 10W to 200W based on an average traveling speed of 100 mm/s to 2,000 mm/s.

3. The method for manufacturing the electrode for the secondary battery according to claim 1, wherein the average traveling speed during the notching is 100 mm/s to 2,000 mm/s.

4. The method for manufacturing the electrode for the secondary battery according to claim 1, wherein the insulating layer comprises a polymer resin.

5. The method for manufacturing the electrode for the secondary battery according to claim 4, wherein the polymer resin is at least one selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluorine rubber, polyvinylidene fluoride, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylenepropylenediene copolymer, polyvinylpyridine, chlorosulfonated polyethylene, latex, polyester resin, acrylic resin, phenolic resin, epoxy resin, polyvinyl alcohol, hydroxypropylmethylcellulose, hydroxypropylcellulose, and diacetyl cellulose.

6. The method for manufacturing the electrode for the secondary battery according to claim 1, wherein an active material is laminated on the coating portion of the electrode sheet.

7. The method for manufacturing the electrode for the secondary battery according to claim 1, wherein the electrode is a positive electrode or a negative electrode.

8. An electrode for a secondary battery comprising a laser cutting electrode tab with an insulating layer and current collector cut in a laminated state, wherein the thickness of the cutting cross section of the electrode tab is 1 to 1.7 times the thickness before cutting.

9. The electrode for the secondary battery according to claim 8, wherein the laser is a laser having a pulse width of 100 ps to 10⁻⁶ ps.

10. The electrode for the secondary battery according to claim 8, wherein the cutting cross section of the electrode tab does not comprise the debris in the form of a shard generated when cutting with a mold.

11. An electrode for a secondary battery comprising a laser cutting electrode tab with an insulating layer and current collector cut in a laminated state, wherein in the cutting cross section of the electrode tab, the length of the current collector protruding from the front end of the insulating layer is less than 20 *µ*m.

12. The electrode for the secondary battery according to claim 11, wherein the laser is a laser having a pulse width of 100 ps to 10⁻⁶ ps.

13. The electrode for the secondary battery according to claim 11, wherein the cutting cross section of the electrode tab does not comprise the debris in the form of a shard generated when cutting with a mold.

14. An electrode manufacturing system comprising,
an electrode sheet supply device for supplying an electrode sheet comprising a current collector partitioned into a coating portion and a non-coating portion and having an insulating layer laminated on the non-coating portion;
a device that irradiates a laser beam having a pulse width of 100 ps to 10⁻⁶ ps to form an electrode tab by notching the non-coating portion on which the insulating layer is laminated; and
a jig for supporting the laser beam irradiation portion for the electrode sheet on the lower surface.

15. The electrode manufacturing system according to claim 14, wherein the electrode sheet supply device is a roll-to-roll device.
